# EUROPEAN PATENT APPLICATION

(11) **EP 1 672 097 A2**
(43) Date of publication of application: **21.06.2006**
(21) Application number: 05257858.0
(22) Date of filing: 20.12.2005
(51) Int. Cl.: C25B 1/04

(54) **Electrolytic hydrogen production method and related systems and electrolytes**

(30) Priority: 20.12.2004 US 18783
(71) Applicant: The General Electric Company, Schenectady NY 12345 (US)
(72) Inventor: Soloveichik, Grigorii Lev, Latham New York 12110 (US)
(74) Representative: Pedder, James Cuthbert

(57) **Abstract**

An electrolyte composition comprises water; at least one ionizing compound and at least one chelating solvent. Also disclosed herein is an electrolyzer system (10) comprising an electrolyte comprising water, at least one ionizing compound, and at least one chelating solvent. The electrolyzer system further comprises a cathode (12) and an anode (14) disposed in the electrolyte, wherein the anode (14) is in electrical contact with the cathode (12). The electrolyzer system (10) also comprises a power source in electrical contact with the anode (14) and the cathode (12).

## Description

This invention relates generally to electrolytic production of hydrogen and more particularly to an electrolyte system for electrolytic production of hydrogen.

As a result of an increase in global pollution and a decrease in fossil fuel reserves, the development of cleaner energy technologies is receiving increasing attention. The production of hydrogen from renewable sources is considered to be one of the most promising future energy alternatives, because hydrogen-based energy production technology tends to avoid or minimize the environmentally harmful emissions commonly associated with fossil fuels.

Electrochemical generation of hydrogen is dominated by water electrolysis. In water electrolysis, water is split into hydrogen and oxygen gas. Water electrolysis is a very attractive process for producing hydrogen because it utilizes water, a readily available and renewable raw material. In general, the most popular electrolysis process is the alkaline electrolysis process, wherein water is dissociated in the presence of an alkali such as potassium hydroxide (KOH).

In alkaline electrolysis, hydrogen production is achieved by electrolysis of aqueous KOH solutions at elevated temperatures of 80 - 90 °C, allowing higher current densities due to higher electrolyte conductivity. It is known that conductivity of KOH solutions increases with temperature up to 140 - 150 °C. However, the practical temperature limit is set by the partial pressure of water over KOH solutions; as above these temperatures the energy consumed for water evaporation (water vapor is carried along with H₂ and O₂ gases) becomes too high for cost-effective energy production.. The increase of KOH concentration decreases the partial pressure of water, but above a certain concentration level, the electrical conductivity decreases due to increased solution viscosity.

Therefore there is a need for an electrolyzer system that can operate at current densities that exceed those achievable by conventional electrolysis systems.

In one aspect of the invention, an electrolyte composition comprises water; at least one ionizing compound and at least one chelating solvent.

In another aspect of the invention, an electrolyte composition comprises: water and an ionizing compound comprising potassium hydroxide. The concentration of potassium hydroxide is up to about 35 weight percent. The electrolyte composition further comprises a chelating solvent comprising ethylene glycol. The concentration of ethylene glycol is up to about 12 percent. The electrolyte composition is a single-phase solution.

In yet another aspect of the invention, an electrolyzer system comprises an electrolyte comprising water, at least one ionizing compound, and at least one chelating solvent. The electrolyzer system further comprises a cathode and an anode disposed in the electrolyte. The electrolyzer system also comprises a power source in electrical contact with the anode and the cathode.

In another aspect of the invention, a method for producing hydrogen comprises providing an electrolyte. The electrolyte comprises water, at least one ionizing compound, and at least one chelating solvent. The method further comprises disposing the electrolyte in an electrolytic system comprising an anode, a cathode and optionally a separator, and applying a potential between the anode and cathode.

The invention will now be described in greater detail, by way of example, with reference to the drawings, in which:-
Fig. 1 illustrates an exemplary electrolysis system in accordance with the present technique;
Fig. 2 illustrates volt-ampere curve for an exemplary electrolyte composition comprising ethylene glycol (H₂O:ethylene glycol = 5:1) at 25 °C;
Fig. 3 illustrates volt-ampere curve for yet another exemplary electrolyte composition comprising ethylene glycol (H₂O:ethylene glycol = 2:1) at 25 °C;
Fig. 4 illustrates volt-ampere curve for an exemplary electrolyte composition comprising ethylene glycol (H₂O:ethylene glycol = 5:1) at 70 °C;
Fig. 5 illustrates volt-ampere curve for yet another exemplary electrolyte composition comprising ethylene glycol (H₂O:ethylene glycol = 2:1) at 70 °C;
Fig. 6 illustrates oxygen evolution reaction current for an exemplary electrolytes composition comprising ethanolamine;
Fig. 7 illustrates oxygen evolution reaction current for exemplary electrolytes compositions comprising different amines;
Fig. 8 illustrates hydrogen evolution reaction current for an exemplary electrolytes containing ethanolamine; and
Fig. 9 illustrates hydrogen evolution reaction current for exemplary electrolytes compositions comprising different amines.

Disclosed herein is an electrolyte composition comprising water, at least one ionizing compound and at least one chelating solvent. Addition of high boiling point chelating solvents to water-based electrolytes for electrolysis of water allows a decrease in the partial pressure of water without compromising on the current density and the overvoltage potential of the electrolyzer. Therefore the electrolyzer can be operated at higher temperatures and higher current densities.

The ionizing compound in certain embodiments of the electrolyte composition of the present invention is selected from the group consisting of a salt, a base, an acid, and combinations thereof. The presence of the ionizing compound in the electrolyte increases the conductivity of the electrolyte. The salt, in some embodiments, is selected from the group consisting of a halide, a sulfate, a nitrate, and combinations thereof. Non-limiting examples of suitable halides include sodium chloride, magnesium chloride, potassium chloride, and combinations thereof

The base in certain embodiments comprises at least one of an alkali metal hydroxide, an alkaline earth metal hydroxide or an alkyl ammonium hydroxide of formula NR₄OH wherein R is one of an alkyl group, an aryl group, or hydrogen. In one embodiment, the base comprises ammonium hydroxide. In yet another embodiment, the base comprises potassium hydroxide. In the hydrogen generation cycle of the electrolyzer, water is mixed with an alkali metal hydroxide such as potassium hydroxide (KOH) in an electrolyte tank. In one embodiment, the base comprises demineralized water. In an exemplary embodiment, the water is pumped to the electrolyzer in order to be decomposed, electrochemically, as given in the following chemical reactions:

2H₂O + 2 e⁻ → H₂ + 2OH⁻ (1)

2 OH⁻ - 2 e⁻ → H₂O + ½ O₂ (2)

Reaction (1) takes place at a cathode and reaction (2) takes place at an anode. By summing the above two equations, the final chemical equation of dissociation of water is given in reaction (3):

H₂O→1/2 O₂⁺H₂ (3)

In some embodiments, the concentration of the ionizing compound in the electrolyte is up to about 35 weight percent. In certain embodiments, the concentration of the ionizing compound is in the range from about 5 to about 35 weight percent. In particular embodiments, the concentration of the ionizing compound is in the range from about 15 to about 30 weight percent.

A chelating solvent suitable for use in embodiments of the present invention has a high boiling point and is stable to hydrolysis in strong basic solutions. The chelating solvents used in accordance with the present technique may have a boiling point of greater than about 100 °C. The chelating solvent desirably is also thermally stable at working temperatures of the electrolyzers, which temperatures may go up to about 150 °C.

A chelating solvent partially replaces water in a coordination sphere of alkali metal cations in an electrolyte, wherein the chelating agent forms a substantially stable complex with a metal cation and provides better ion separation, leading to higher electrolyte conductivity. The chelating solvent, in certain embodiments, is selected from compounds comprising at least two donor atoms linked by a linker. These donor atoms comprise atoms selected from the group consisting of oxygen, nitrogen and combinations thereof. The linker linking the donor atoms, in some embodiments, is a hydrocarbon group or heteroatom (e.g. ether) group. In some embodiments, the linker optionally comprises hydrophilic end groups thereby increasing the solubility of the chelating solvent in water. In some embodiments, the hydrocarbon group comprises at least two carbon atoms, for example an ethylene group (-C₂H₄-). In some embodiments, the concentration of the chelating solvent ranges from about 5 weight percent to about 50 weight percent. In certain embodiments, the concentration of the chelating solvent ranges from about 10 weight percent to about 40 weight percent. In some embodiments the electrolyte compositions described herein form a single phase electrolyte system.

Some non-limiting examples of suitable chelating solvents are ethylene glycol and its oligomers, polyethylene glycol, glycerine, polyvinyl alcohol, polyvinylpyrrolidone, ethanolamine, ethylene diamine, diethylene triamine, glycerol, polyamines and combinations thereof. In some embodiments, the ionizing compound comprises an alkali metal hydroxide and the chelating solvent is selected from the group consisting of ethylene glycol, oligomers of ethylene glycol diethylene glycol, ethanolamine, ethylene diamine, diethylene triamine, glycerol, and combinations thereof. In one embodiment, the electrolyte composition comprises ethylene glycol. In some embodiments, the concentration of the ethylene glycol ranges from about 10.... weight percent to about 25 weight percent. In some other embodiment, the electrolyte composition comprises KOH and ethylene diamine. In some embodiments, the concentration of ethylene diamine ranges from about 10.... weight percent to about 35 weight percent.

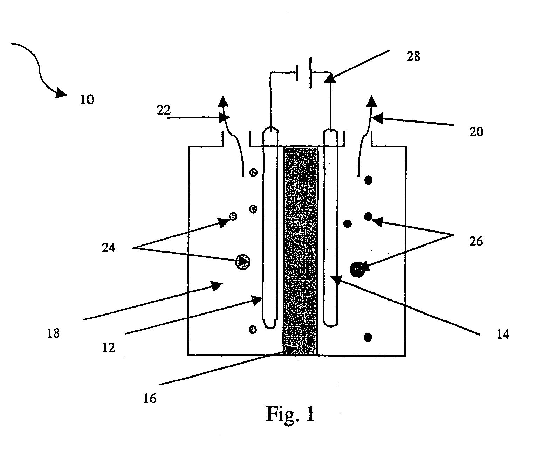

Also disclosed herein are electrolyzer systems using the electrolyte compositions described above. Fig. 1 illustrates an electrolyzer system 10 comprising an electrolyte 18 comprising at least one ionizing compound and at least one chelating solvent as described previously.

Electrolysis is a method for production of a chemical reaction that is electrically driven by passage of an electric current, typically a direct current (DC), through an electrolyte between an anode electrode and a cathode electrode. The exemplary electrolyzer system as described in Fig. 1 further comprises an anode 14 and a cathode 12 immersed in the electrolyte 18. The electrodes are electrically connected through an external circuit 28 and a power source (not shown). The electrodes comprise material capable of conducting an electrical charge and remaining stable in the electrolyte. Non-limiting examples of suitable material for cathode 12 include nickel (Ni), Ni alloys, silver (Ag), copper (Cu), gold, platinum, palladium, rhodium, iridium, cobalt, ruthenium and combinations thereof. Non-limiting examples of suitable material for anode 14 include stainless steel and Ni or Ni alloys. The rate of production of hydrogen is proportional to the current density. A direct current (DC) is passed between two electrodes in the aqueous electrolyte 18 to split water (the reactant) into hydrogen and oxygen, the component product gases. Hydrogen evolves at the surface of cathode 12 as shown by the hydrogen bubbles 24, thereby producing hydrogen gas 22. Similarly, oxygen evolves at the surface of anode 14 as shown by the oxygen bubbles 26 thereby producing oxygen gas 20.

The electrolyzer system 10 in some embodiments optionally comprises a separator 16, such as an ion exchange membrane or porous diaphragm. In the embodiments without the separator, a mixture of oxygen and hydrogen is produced where the products of the anode mix with the products of the cathode. The separator 16 as shown in Fig. 1 is disposed between the cathode 12 and anode 14 to prevent mixing of the product gases in the electrolysis process. In one embodiment, the separator 16 comprises a thin sheet of a hydrated cation exchange resin characterized in that it allows passage of positively charged ions while minimizing passage of negative charged ions.

It should be appreciated by a person skilled in the art that a plurality of such electrolyzer systems can be connected in series or parallel to achieve a certain hydrogen production output. The achievement of a preselected level of production involves a trade-off between increasing the operating current density and increasing the number of the cells.

Disclosed herein is also a method for producing hydrogen comprising providing an electrolyte comprising water, at least one ionizing compound, and at least one chelating solvent. The compositions of the electrolyte are as described in the preceding sections. The method further comprises disposing the electrolyte in an electrolytic system comprising an anode and a cathode as described previously and illustrated in Fig. 1. A potential is applied between anode 14 and cathode 12 to achieve the overall electrochemical reaction (as described earlier) to produce hydrogen. The hydrogen rich gas is collected from the cathode. In some embodiments, the method may further involve purification of the hydrogen rich gas to obtain substantially pure hydrogen gas. In some embodiments, the purification process comprises removal of moisture in the hydrogen rich gas by well-known techniques including condensing the moisture, using a molecular sieve bed and a combination thereof.

The presence of the chelating solvent allows the electrolyzer system to be operated at an elevated temperature, wherein, in some embodiments, the electrolyte is heated to a temperature of up to about 150 °C. In certain embodiment, the electrolyte is heated about 80 °C to about 110 °C. In some embodiments, the hydrogen is produced at a pressure of up to about 4 MegaPascal (MPa). In some other embodiments, hydrogen may be produced at a pressure of up to about 3 MPa.

The electrolyte compositions described herein allow operating an alkali electrolyzer for hydrogen production at higher temperatures and, therefore, higher current densities at a given potential. In operation, higher current density allows achieving a higher rate of hydrogen production using a smaller size electrolyzer, therefore resulting in significant capital savings.

Without further elaboration, it is believed that one skilled in the art can, using the description herein, utilize the present invention to its fullest extent. The following examples are included to provide additional guidance to those skilled in the art in practicing the claimed invention. The examples provided are merely representative of the work that contributes to the teaching of the present application. Accordingly, these examples are not intended to limit the invention, as defined in the appended claims, in any manner.

### EXAMPLE

Electrolytes were tested in a 4-dram glass vial cell equipped with a teflon cap with holes for working electrode, a counter electrode (Pt wire) and a reference electrode (Hg/HgO in 6 M KOH). Working electrode was prepared by placing a metal (nickel or 304 stainless) into a glass capillary and sealing it with an epoxy resin. Electrolyte solutions were prepared before measurements by dissolution of KOH in deionized water and then a calculated amount of chelating solvent was added.

Several electrolyte compositions were tested using different chelating solvents, such as ethylene glycol. The results of such experiments are listed in Table 1. Each set of experiments started with running a control test with an electrolyte composition comprising only water and KOH. Column 2 of Table 1 shows the actual concentration of ethylene glycol in the electrolyte solution.

**Table 1**

| Experiment No. | Concentration of ethylene glycol in solvent, wt.% | Concentration of ethylene glycol in electrolyte, wt. % | Current at 2.75 V , A | Temperature, °C |
|---|---|---|---|---|
| 1 | 0 (control) | 0 | 0.918 | 25 |
| 2 | 16.7 | 12.5 | 1.495 | 25 |
| 3 | 33.3 | 25.0 | 1.036 | 25 |
| 4 | 50.0 | 37.5 | 0.845 | 25 |
| 5 | 0 (control) | 0 | 1.597 | 70 |
| 6 | 16.7 | 12.5 | 1.807 | 70 |
| 7 | 33.3 | 25.0 | 1.659 | 70 |
| 8 | 50.0 | 37.5 | 1.334 | 70 |

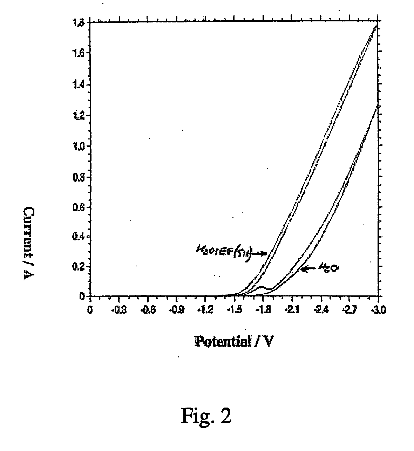

Experiments 1 and 5 were run with an electrolyte composition comprising about 25 weight% solutions of KOH in pure water (control experiment) at about 25 and about 70 °C. In experiments 2-4 and 6-8, electrolyte compositions comprising different mixtures of water and ethylene glycol and KOH were tested in water electrolysis using a cyclic voltammetry technique from 0 to -3 Volt at ambient (about 25 °C) and elevated (about 70 °C) temperatures. The electrolyte composition was made by dissolving 4.0 grams (g) of KOH in 12 grams of water (in examples 1 and 5) or mixed solvent (in example 2-4 and 6-8)) and each electrolyte composition was tested in a beaker-type electrochemical cell with nickel electrodes of ¼ inch having a working area of 4 cm². The inter-electrode distance was kept at 1 mm. The volt-ampere (VI) curves for each of these experiments were generated as shown in Figs. 2-5.

Fig. 2 shows the volt-ampere curve for experiment 1 with 25 % KOH solution in water (control) and the 5:1 mixture of water and ethylene glycol at about 25 °C (experiment 2). As given in Table 1, at 2.75 voltage using the electrolyte composition comprising 5:1 mixture of water and ethylene glycol, the currents generated through the electrolysis process at about 25 and about 70 °C were substantially greater than the control experiment which was run without any chelating solvent.

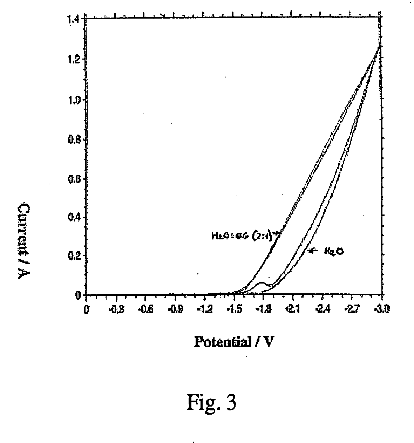

Similarly, Fig. 3 shows the volt-ampere curve for 25 % KOH solution in water (control) and 2:1 mixture of water and ethylene glycol at about 25 °C (experiment 3). As given in Table 1, at 2.75 voltage using the electrolyte composition comprising 2:1 mixture of water and ethylene glycol, the current generated through the electrolysis process at about 25 °C was substantially greater than the control experiment, which was run without any chelating solvent. It was observed that the improvement in the current was substantially higher at lower concentration of the ethylene glycol.

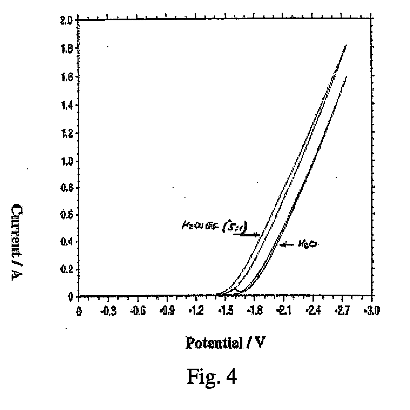

Fig. 4 shows a volt-ampere curve for 25 % KOH solution in water (control) and the 5:1 mixture of water and ethylene glycol at 70 °C (experiment 6). As given in Table 1, at 2.75 voltage using the electrolyte composition comprising 5:1 mixture of water and ethylene glycol, the current generated through the electrolysis process at about 70 °C was substantially greater than the control experiment (experiment 5), which was run without any chelating solvent.

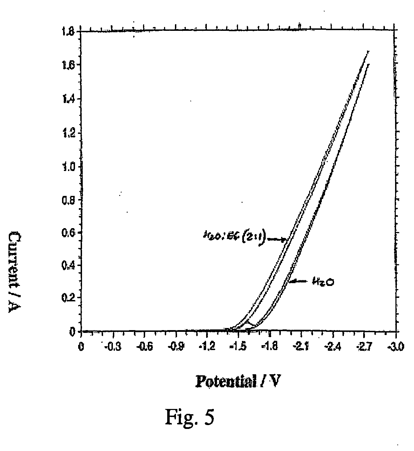

Fig. 5 shows a volt-ampere curve for 25 % KOH solution in water (experiment 5) and the 2:1 mixture of water and ethylene glycol at about 70 °C (experiment 6). As given in Table 1, at 2.75 voltage, using the electrolyte composition comprising 2:1 mixture of water and ethylene glycol, the current generated through the electrolysis process at about 70 °C was substantially greater than that generated in the control experiment, which was run without any chelating solvent. It was observed that the improvement in the generated current was substantially higher at lower concentration of the ethylene glycol. As shown in Table 1, the experiments with 1:1 water and ethylene glycol mixture (experiments 4 and 8) showed a decrease in the current compared to that in the control experiments (experiments 1 and 4). This could be due to the increase in viscosity of the electrolyte, which increased the overpotential of the electrolyzer cell.

Another set of experiments was run using an electrolyte composition comprising chelating solvents such as amines and aminoalcohols containing two or more donor (N, O) atoms connected through a linker. Examples of such compounds are ethanolamine (EA, boiling point 170 °C), ethylene diamine (EDA, boiling point 118 °C) and diethylene triamine (DETA, boiling point 199 °C). These compounds are generally more stable in terms of oxidation than aliphatic alcohols. The results of experiments with electrolytes comprising ethanolamine (8 experiments with varying weight % of ethanolamine) are illustrated in Table 2.

**Table 2**

| Experiment No | KOH, wt% | Ethanolamine wt% | i_{c} at -2 V, mA | lₐ at +1.6V, mA | Total current, mA |
|---|---|---|---|---|---|
| 9 | 24.4 | 46.8 | 2.7 | 5.4 | 8.1 |
| 10 | 21.4 | 35.7 | 8.8 | 12.8 | 21.7 |
| 11* | 24.5 | 23.7 | 9.9 | 20.0 | 29.9 |
| 12 | 27.3 | 23.4 | 10.3 | 20.8 | 31.1 |
| 13 | 27.3 | 35.3 | 6.5 | 13.6 | 20.1 |
| 14* | 27.4 | 46.6 | 6.3 | 5.9 | 12.1 |
| 15 | 24.4 | 0.0 | 7.3 | 10.6 | 18.0 |
| 16 | 27.4 | 0.0 | 13.3 | 18.4 | 31.7 |

**Table 3**

| Experiment No | KOH, wt. % | Diethylene trilamine, wt. % | i_{c} on Ni (-2 V), mA | lₐ on SS (1.2V), mA | Total current, mA |
|---|---|---|---|---|---|
| 17 | 15.1 | 26.1 | 12.0 | 7.4 | 19.4 |
| 18 | 17.4 | 21.4 | 17.0 | 12.8 | 29.8 |
| 19 | 17.8 | 19.6 | 16.3 | 13.5 | 29.7 |
| 20* | 18.9 | 18.5 | 19.8 | 15.0 | 34.8 |
| 21 | 20.8 | 15.4 | 22.1 | 10.8 | 32.9 |
| 22* | 21.9 | 13.6 | 29.2 | 19.6 | 48.8 |
| 23 | 24.4 | 0.0 | 33.6 | 28.1 | 61.7 |
| 24 | 27.4 | 0.0 | 35.7 | 31.0 | 66.7 |

As shown in Tables 2 and 3, l_{c} designates the hydrogen evolution reaction (HER) current and lₐ designates the oxygen evolution reaction (OER) current. Experiments 15 and 16 were done without ethanolamine being present in the electrolyte. The presence of ethanolamine did not decrease the HER and OER currents.

For electrolytes with higher concentration of KOH (as shown in Tables 2 - 3), HER and OER currents decreased with the concentration of chelating solvent in the mixture but was still comparable with the value for pure aqueous KOH electrolytes (runs 15, 16, 23 and 24).

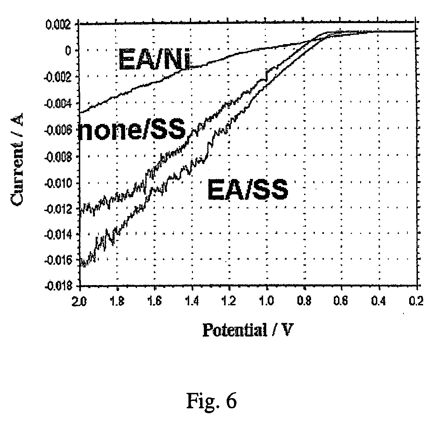

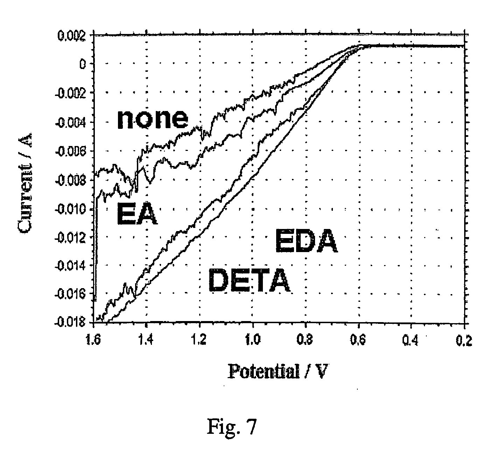

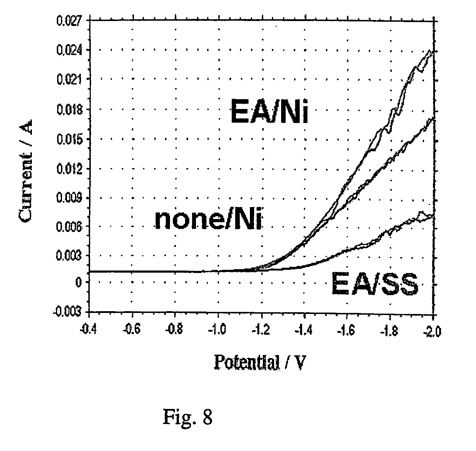

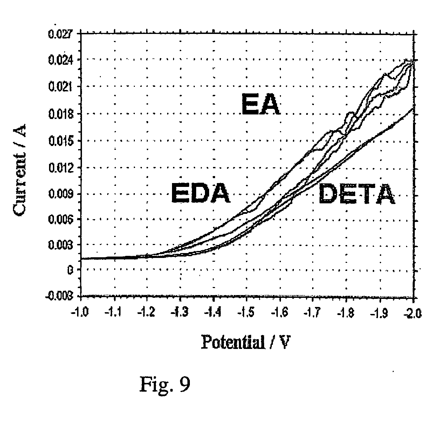

Figs. 6-9 illustrate VI curves for electrolytes comprising 17 weight % of KOH and several various amines. Fig. 6 shows the comparison between oxygen evolution reaction on Ni and stainless steel 304 electrodes for 17 % KOH electrolytes comprising ethanolamine (H₂O:EA = 10:3) at about 25 °C. Fig. 7 shows a comparison of oxygen evolution reaction on stainless steel 304 electrode for 17 % KOH electrolytes comprising different amines such as EA, EDA and DETA (H₂O:amine = 10:3) at about 70 °C. Fig. 8 shows a comparison of hydrogen evolution reaction on Ni and stainless steel 304 electrodes for 17 % KOH electrolytes comprising ethanolamine (H₂O:EA = 10:3) at about 70 °C. Fig. 9 shows comparison of hydrogen evolution reaction on stainless steel 304 electrode for 17 % KOH electrolytes comprising different amines (H₂O:solvent = 10:3) at about 70 °C. Figs. 6-9 clearly illustrate that addition of chelating solvents did not decrease the hydrogen evolution reaction (HER) and oxygen evolution reaction (OER) currents but sometimes increases it for 17 % KOH electrolytes.

## Claims

1. An electrolyte (18) composition comprising:
water;
at least one ionizing compound; and
at least one chelating solvent.

2. The composition according to claim 1, wherein said ionizing compound is selected from the group consisting of a salt, a base, an acid, a combination of a salt and a base and a combination of a salt and an acid.

3. The composition according to claim 2, wherein said salt is selected from the group consisting of a halide, a sulfate, a sulfonate, a nitrate, a complex fluoride and combinations thereof.

4. The composition according to claim 2, wherein said base comprises at least one selected from the group consisting of an alkali metal hydroxide, an alkaline earth metal hydroxide and an alkyl ammonium hydroxide.

5. The composition according to claim 1, wherein said ionizing compound comprises potassium hydroxide.

6. The composition according to claim 1, wherein said chelating solvent comprises at least two donor atoms linked by a linker, wherein said at least two donor atoms comprise atoms selected from the group consisting of oxygen, nitrogen and combinations thereof.

7. The composition according to claim 1, wherein said chelating solvent is selected from the group consisting of ethylene glycol, oligomers of ethylene glycol diethylene glycol, ethanolamine, ethylene diamine, diethylene triamine, glycerol, and combinations thereof.

8. The composition according to claim 5, wherein said ionizing compound comprises an alkali metal hydroxide and said chelating solvent is selected from the group consisting of ethylene glycol, oligomers of ethylene glycol diethylene glycol, ethanolamine, ethylene diamine, diethylene triamine, glycerol, and combinations thereof

9. The composition according to claim 1, wherein said chelating solvent has a concentration ranging from about 5 to about 50 weight. %.

10. The composition according to claim 1, wherein said chelating solvent comprises ethylene glycol.
